(19) Europäisches Patentamt
European Patent Office
Office européen des brevets

(11) Publication number: **0 147 374**
**A2**

(12) **EUROPEAN PATENT APPLICATION**

(21) Application number: **84850380.1**

(22) Date of filing: **07.12.84**

(51) Int. Cl.⁴: **C 04 B 24/32**

(30) Priority: **13.12.83 SE 8306864**

(43) Date of publication of application: **03.07.85 Bulletin 85/27**

(84) Designated Contracting States: **AT BE CH DE FR GB IT LI NL**

(71) Applicant: **BEROL KEMI AB**
**Box 851**
**S-444 01 Stenungsund 1(SE)**

(72) Inventor: **Karlsson, Göran**
**Hökegardsgatan 81**
**S-431 38 Mölndal(SE)**

(74) Representative: **Andersson, Rolf**
**BEROL KEMI AB Box 851**
**S-444 01 Stenungsund(SE)**

(54) **A method for the manufacture of a cement containing composition having improved properties.**

(57) To a cement composition there is added an alkylene oxide adduct having the general formula

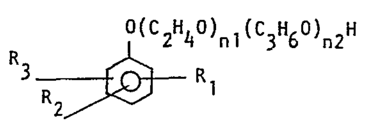

where $R_1$ is the group $CH_2NR_4R_5$ or the group $C_2N^+R_4R_5R_6X^-$, where $R_4$, $R_5$ and $R_6$ are alkyl or hydroxyalkyl groups having 1-4 carbon atoms and X is an anion, $R_2$ is an alkyl group having 1-15 carbon atoms, $R_3$ is hydrogen or one of the groups $R_2$ and $R_1$, $n_1$ is a number between 10 and 200, preferably 25-100, $n_2$ is a number between 0 and 100, preferably 0-25, the total number of carbon atoms in the alkyl substituents in the benzene ring being 6-30 and the ratio between $n_1$ and $n_2$ more than 2.

In this way the cement based composition obtains a good fluidity and an appropriate air content.

EP 0 147 374 A2

# A METHOD FOR THE MANUFACTURE OF A CEMENT CONTAINING COMPOSITION HAVING IMPROVED PROPERTIES

The present invention refers to a method for the manufacture of a cement-containing composition, such as concrete and mortar, having good fluidity and an appropriate air content. These properties are obtained by adding an alkylene oxide adduct containing nitrogen.

In cement-containing compositions, such as concrete, today mainly three different types of additives improving the fluidity are used, viz. ligno sulphonate, naphtalene sulphonic acid formaldehyde condensate and sulphonated melamine formaldehyde condensates. These additives are anionic polymers and act by so called electrostatic stabilization. The advantages of the flowability improving additives can be summarized as follows:

a) The cement-containing composition can be made easily workable and pumpable at low water-cement ratios.

b) The cement-containing composition can be manufactured with less mixing water and with the same consistency as a cement-containing composition without fluidity improving additives. The composition will hereby be stronger, i.e. the strength is increased.

c) The cement-containing composition can be made more inexpensive by the fact that the contents of both cement and water can be reduced while still obtaining the desired strength.

However, the anionic additives have some serious drawbacks. Thus, the duration of the electrostatic stabilization is relatively short. Already during the first hour after the admixture the consistency is strongly decreased and the composition cannot be used in the intended way. The fluidity is further strongly temperature dependent

causing difficulties at varying temperatures. Finally, the fluidizing additives have to be completed by so called air entraining agents in order to increase the air content in the concrete and thus obtain a frost resistent composition. The air entraining agent is further often very difficult to combine with the fluidizing additive.

It has further been proposed to add different types of nonionic alkylene oxide adducts to a cement-containing composition. See e.g. the German printed publication 1003640 and the European patent application 54175. The nonionic alkylene oxide adducts achieve their fluidizing effect by so called steric stabilization. The positive effect on the fluidity of the concrete is high, but these additives also cause a too high air content causing severe deterioration of the strength of the cementitious composition.

Thus, there is a need for additives to a cement-containing composition, which especially during the first hour after the admixture of the composition provides a stable fluidizing effect as well as an appropriate air content.

It has now proved possible to obtain a cement containing composition with good fluidity during the first hour after the admixture and with an air content which makes the composition frost resistence at the same time as the strength is maintained at a high level by adding an alkylene oxide adduct containing nitrogen. It has also proved that the good fluidity achieved by adding this alkylene oxide adduct varies with the temperature to a relatively small extent. The nitrogenous ethylene oxid adduct has the general formula

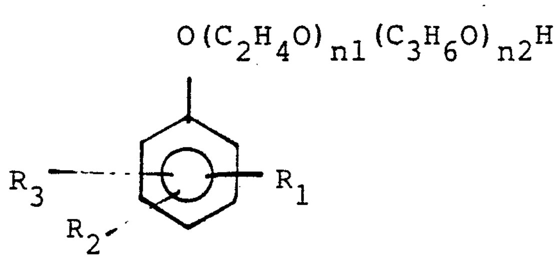

where $R_1$ is the group $CH_2NR_4R_5$ or the group $CH_2N^+R_4R_5R_6X^-$ where $R_4$, $R_5$ and $R_6$ are alkyl or hydroxyalkyl groups having

1-4 carbon atoms and X is an anion, $R_2$ is an alkyl group having 1-15 carbon atoms, $R_3$ is hydrogen or one of the groups $R_2$ and $R_1$, $n_1$ is a number between 10 and 200, preferably 25-100, $n_2$ is a number between 0 and 100, preferably 0-25, the total number of carbon atoms in the alkyl substituents in the benzene ring being 6-30 and the ratio between $n_1$ and $n_2$ more than 2. Alkylene oxide adducts with tertiary nitrogen are usually preferred to the quaternary ones. $R_4$, $R_5$, and $R_6$ are preferably methyl groups. The quantity of the additive is normally 0.01-2, preferably 0.05-1% calculated on the cement weight and is preferably added to the mixing water of the cement containing composition.

The term "cement" refers to a binding agent which cures in the presence of water and which is used for constructional purposes. Examples of different types of cement comprised by the invention are Portland cement and different blended cements with Portland cement as an essential component and aluminious and magnesium cement.

The nitrogenous alkylene oxide adduct can be manufactured by a Mannich-reaction between a phenol compound, formaldehyde and an amine compound and a subsequent concentration of ethylene oxide or a combination of ethylene oxide and propylene oxide. The phenol compound, formaldehyde, and the nitrogenous compound are transformed at a temperature below 100°C, at which an amino-methyl-phenol compound is formed. The molecular ratio between the reactants is approximately 1 mole phenol compound, 1-2 moles of formaldehyde and 1-2.5 moles of the amino-compound. Instead of formaldehyde, paraformaldehyde may be used, as this is easily decomposed in the reaction mixture and forms formaldehyde. The use of paraformaldehyde also involves the advantage that the water content of the reaction mixture is limited. If desired, the water formed can be removed by distillation from the reaction mixture containing the Mannich-compound or the quaternated Mannich-compound, before the amino-methyl-phenol compound is submitted to an alkoxylation with a suitable number of moles of ethylene oxide and/or propylene oxide or mixtures thereof

at a temperature of 50-200°C and a pressure of 1-10 atmospheres. The alkoxylation can, if desired, be performed in two or more steps with intermediate distillation of the water present in the reaction mixture. In the case a quaternary ammonium compound is desired, the alkylene oxide adducts are reacted with an appropriate quaternarization agent with a slight deficit at a temperature exceeding the melting point of the alkylene oxide adduct.

The phenol compounds used as starting material at the manufacture of the compounds according to the invention have the general formula

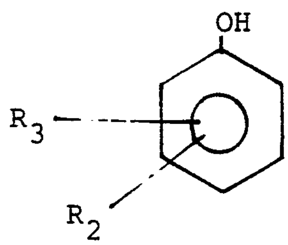

where $R_2$ denotes an alkyl group with 1-15 carbon atoms and $R_3$ denotes hydrogen or an alkyl group with 1-15 carbon atoms, the total number of carbon atoms in the alkyl substituents being 6-30. As example of suitable phenols, nonyl phenol, octyl phenol, dinonyl phenol, and dioctyl phenol can be mentioned.

As nitrogenous reactant dialkyl amines with 1-4 carbon atoms in each alkyl substituent can be used. Examples of suitable amines according to the invention are dimethyl amine, methylethyl amine, methylpropyl amine, methylbutyl amine, diethyl amine, dipropyl amine and ethylpropyl amine.

As quaternarization agents alkyl chloride or dialkyl sulphate can be used. Examples of such compounds are methyl chloride, ethyl chloride, propyl chlorides, butyl chlorides, dimethyl sulphate and diethyl sulphate. In the case chloride compounds are used, a chloride ion is obtained as anion. If desired, this chloride ion or each other anion can be exchanged for the preferred anion, e.g. by the addition of a salt of the preferred anion having a higher solubility constant than the corresponding chloride salt or by ion exchange in an anion exchanger. Examples of possible ions are

nitrate, carbonate, hydroxyl, phosphide, iodide, bromide, methyl sulphate, sulphate, acetate, formate, citrate and tartrate ions. Monovalent ions are generally preferred.

The following examples will further illustrate the invention.

Example 1

A concrete mixture with a water-cement ratio of 0.80 was prepared starting from 12.08 kg Standard Portland cement, 46,80 kg gravel having a particle size of 0-8 mm, and 27.40 kg ballast having a particle size of 8-16 mm. To the preparation water there was added 0.3%, calculated on the cement weight, of an additive according to Table 1.

Table 1

Test Compound

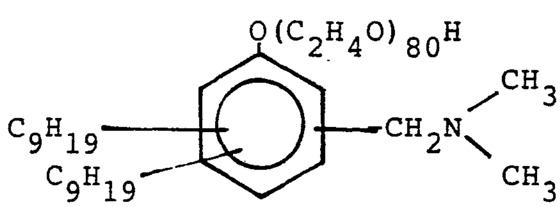

B

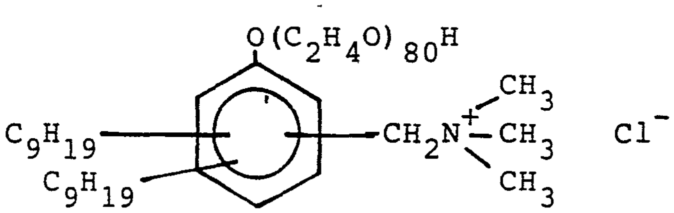

C

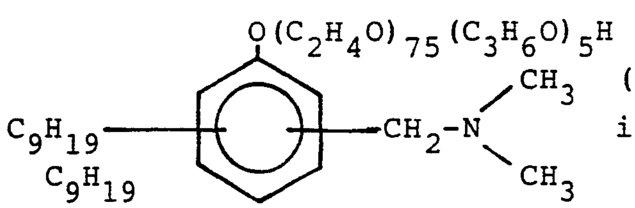

(the alkylene oxide is reacted randomly)

D Melamine sulfonic acid - formaldehyde condensate

E

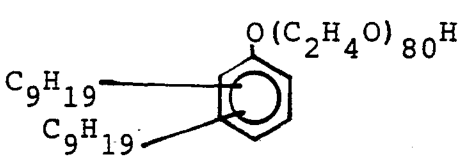

F without additives

In tests A-C additives according to the invention were used while tests D-F are comparative tests.

The different concrete mixtures were then tested with regard to fluidity according to SS 13 71 17, air content according to SS 13 71 11, and compressive strength according to SS 13 72 10. The following results were obtained:

Table 2

| Test | | A | B | C | D | E | F |
|---|---|---|---|---|---|---|---|
| Fluidity | | | | | | | |
| cm | 0 min | 52 | 51 | 51 | 46 | 51 | 42 |
| | 20 min | 51 | 50 | 50 | 43 | 50 | 38 |
| | 40 min | 50 | 47 | 49 | 41 | 48 | 37 |
| | 60 min | 48 | 43 | 47 | 37 | 48 | 35 |
| Air content | | | | | | | |
| % | | 5,6 | 5,1 | 5,3 | 0,65 | 8,5 | 1,6 |
| Strength | | | | | | | |
| MPa | 24 hours | 7,0 | 7,1 | 7,1 | 9,1 | 4,7 | 10,3 |
| | 28 days | 24,6 | 24,1 | 24,8 | 36,5 | 16,3 | 34,2 |

From the results it can be seen that concrete with an addition according to the invention provides both excellent fluidity during the first hour and an air content of about 5-6%, which is required for concrete to be regarded as frost resistent.

Example 2

In this example it was examined how the fluidity according to ASTM C 230 of a mortar having a water-cement ratio of 0.75 and manufactured from 0.16 kg Standard Portland cement, 0.28 kg sand having a particle size of 0-0.5 mm, 0.28 kg sand having the particle size of 0.5-1.25 mm, and 0.28 kg sand having a particle size of 1.0-2.0 mm varies with the temperature. The compounds of tests A and B in Example 1 were added as fluidizing agents as well as a mixture of melamine sulphonic acid/formaldehyde condensates and air entraining

agents. In all cases the amounts of additives were 0.3% calculated on the cement weight. The following results were obtained:

Table 3

| | Melamine sulphonic acid formaldehyde condensate + air entraining agents | | | A | | | B | | |
|---|---|---|---|---|---|---|---|---|---|
| Temp °C | 9 | 22 | 29 | 9 | 22 | 29 | 9 | 22 | 29 |
| Fluidity mm 5 impacts | | | | | | | | | |
| 0 min | 187 | 185 | 185 | 205 | 200 | 200 | 195 | 192 | 185 |
| 30 min | 170 | * | 165 | 180 | * | * | 175 | 175 | 170 |
| 60 min | 155 | 165 | 130 | 180 | 175 | 170 | 175 | 175 | 150 |

* measurements not performed

From the result it can be seen that the fluidity of concrete containing the additives according to the invention varies less with the temperature and time than concrete containing melamine formaldehyde condensate and air entraining agents.

Example 3

A mortar having a water-cement ratio of 0.92 and manufactured from 0.13 kg Standard Portland cement, 0.87 kg sand having a particle size of 0-8 mm. To the preparation water there was added 0.3%, calculated on the cement weight, of the compounds G and H.

Additive G:

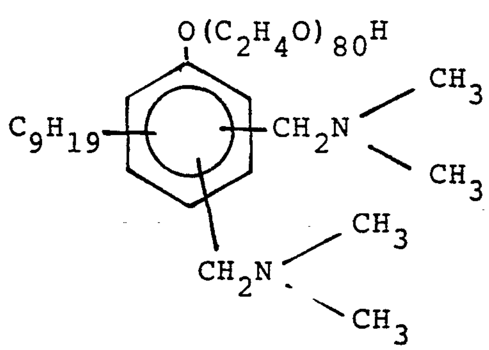

Additive H:

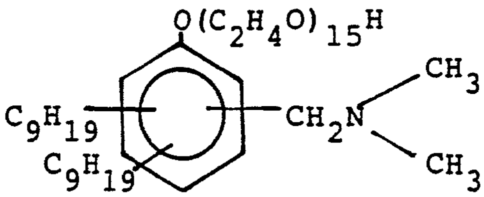

The concrete was then tested with regard to fluidity according to ASTM C230. The following results were obtained:

Table 4

| Additive | G | H |
|---|---|---|
| Fluidity, mm | | |
| 0 h 10 impacts | 186 | 165 |
| 20 " | 215 | 198 |
| 1 h 10 " | 162 | 147 |
| 20 " | 192 | 181 |
| Air content, % | | |
| 0 h | 6.0 | 1.2 |

From the results it can be seen that the additives G and H give concrete with good fluidity.

C L A I M S

1. A method for the manufacture of a cement-based composition to which an alkylene oxide adduct is added in order to improve the properties of the cement-containing composition, characterized in that the alkylene oxide adduct has the general formula

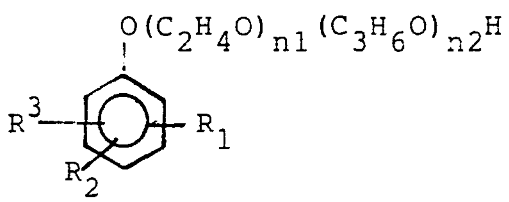

where $R_1$ is the group $CH_2NR_4R_5$ or the group $CH_2N^+R_4R_5R_6X^-$, where $R_4$, $R_5$ and $R_6$ are alkyl or hydroxyalkyl groups having 1-4 carbon atoms and X is an anion, $R_2$ is an alkyl group having 1-15 carbon atoms, $R_3$ is hydrogen or one of the groups $R_2$ and $R_1$, $n_1$ is a number between 10-200, preferably 25-100, $n_2$ is a number between 0 and 100, preferably 0-25, the total number of carbon atoms in the alkyl substituents in the benzene ring being 6-30 and the ratio between $n_1$ and $n_2$ more than 2.

2. A method according to claim 1, characterized in that the alkylene oxide adduct which is added contains a tertiary nitrogen.

3. A method according to claims 1-2, characterized in that the alkylene oxide adduct is added in an amount of 0.01-2.0%, preferably 0.05-1.0% counted on the cement weight.